# EUROPEAN PATENT SPECIFICATION

(11) **EP 4 364 573 B1**
(45) Date of publication and mention of the grant of the patent: **20.08.2025**
(21) Application number: 23207389.0
(22) Date of filing: 02.11.2023
(51) Int. Cl.: A21B 1/28, A21B 1/42, F24C 15/32, F24B 5/08

(54) **COOKING LINE AND OVEN FOR COOKING FOOD PRODUCTS AND RELATED FUNCTIONING METHOD**
KOCHLINIE UND OFEN ZUM KOCHEN VON LEBENSMITTELPRODUKTEN UND ZUGEHÖRIGES BETRIEBSVERFAHREN
LIGNE DE CUISSON ET FOUR POUR LA CUISSON DE PRODUITS ALIMENTAIRES ET PROCÉDÉ DE FONCTIONNEMENT ASSOCIÉ

(30) Priority: 03.11.2022 IT 202200022518
(43) Date of publication of application: 08.05.2024
(73) Proprietor: CLM Bakery System S.r.l., 33080 Fiume Veneto (PN) (IT)
(72) Inventor: Roncadin, Francesco, 33080 Fiume Veneto (PN) (IT)
(74) Representative: Petraz, Davide Luigi

(56) References cited:
- EP-A1- 2 279 665
- EP-B1- 0 115 838
- DE-U1- 8 401 054
- FR-A1- 3 066 885

## Description

### FIELD OF THE INVENTION

The present invention concerns an oven for cooking food products and a related functioning method.

The present invention can be used, advantageously but not exclusively, for the industrial cooking of baked goods such as bread, focaccia, panettone and the like. The invention further concerns an industrial line comprising one or more ovens for cooking food products.

### BACKGROUND OF THE INVENTION

Industrial ovens in which food products are moved inside a cooking tunnel are known.

EP2279665A1 discloses a known static oven of industrial type for cooking baked products such as bread, pizza and the like, which comprises a cooking chamber and a combustion chamber, in which the fumes generated in the combustion chamber can enter the cooking chamber.

FR3066885A1 relates to an outdoor oven comprising a cooking chamber and a combustion chamber, in which both the flames and fumes generated in the combustion chamber can enter the cooking chamber.

However, it is known that it is necessary to obtain a good diffusion of heat inside a cooking tunnel, avoiding forced turbulence for balancing the heat along the entire extension of the tunnel.

There is therefore the need to perfect an oven for the industrial cooking of food products that can overcome at least one of the disadvantages of the state of the art.

To do this, it is necessary to solve the technical problem of identifying an optimal structure and method for heat distribution in the oven.

One purpose of the present invention is to provide an oven, and to devise a relative method which allows to obtain a good heat diffusion, allowing a more homogeneous cooking and a better browning of the food products.

Another purpose of the present invention is to provide an oven which allows to obtain an optimal distribution of the temperature therein.

Another purpose of the present invention is to provide an oven which is as automated as possible, allowing the temperature inside the cooking chamber to be optimally monitored and controlled.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, and to resolve the technical problem disclosed above in a new and original way, also achieving considerable advantages compared to the state of the prior art, an oven according to the present invention has been devised for cooking food products comprising an external casing internally having a cooking chamber delimited by internal lateral walls, by an upper wall and a bottom wall and having a front entrance aperture.

In accordance with one aspect of the present invention, the oven comprises an internal casing of refractory material delimited by respective lateral walls and a bottom wall. The internal casing is disposed in the cooking chamber and is supported with respect to the bottom wall of the cooking chamber so as to be distanced therefrom, defining a lower interspace. The internal casing is laterally sized so that at least one lateral wall is distanced from the respective lateral wall of the cooking chamber, defining at least one lateral interspace in communication with the aforesaid lower interspace. The upper edges of the aforesaid lateral walls of the internal casing are distanced from the upper wall of the cooking chamber, defining an upper passage communicating with the at least one lateral interspace and with the inside of the internal casing.

In accordance with another aspect of the present invention, said oven comprises transport means positioned in the internal casing and provided with a plurality of shelves for supporting the food products. The transport means are configured to advance the shelves in a working direction.

In accordance with one aspect of the present invention, the oven comprises at least one combustion chamber, provided with a heat generating source, disposed under a horizontal lying plane of the bottom wall of the internal casing and having an aperture for the outlet of the combustion fumes in direct communication with the aforesaid lower interspace.

In accordance with one aspect of the present invention, the oven comprises suction means having suction mouths disposed inside the bulk of the internal casing. The suction means are configured to cause a forced drawing of the combustion fumes generated by said heat generating source along a path of the combustion fumes which develops from the outlet aperture of the at least one combustion chamber along the lower interspace, ascending along the at least one lateral interspace and, through the at least one upper passage, entering inside the internal casing up to the aforesaid suction mouths disposed in the internal casing. The combustion fumes enter inside the internal casing according to a direction transverse to the working direction.

In doing so, at least the advantage is obtained that such a fumes movement path allows, in its passage along the lower interspace, to heat the lower part of the cooking chamber, for example the refractory of the lower wall, for cooking by irradiation from below, and at the same time to cook the food products by means of an enveloping heat from above. Thanks to such a solution, it is not necessary to provide further heating devices, since the combustion fumes and the heat generated by the combustion chamber are sufficient to cook both the lower part and the upper part of the food products.

According to another aspect of the invention, the lower interspace is subdivided, by means of a separation foil located transversely to said working direction, into corresponding two parts, each communicating through a corresponding lateral interspace and a corresponding upper passage with the inside of the internal casing, defining paths of the combustion fumes which develop from the outlet apertures of the combustion chambers, each along one of the parts of the lower interspace, ascending along the lateral interspaces and, through the upper passages, entering inside the internal casing according to substantially parallel directions and opposite senses to each other and both transverse to the working direction.

Thanks to the presence of the two combustion chambers, each communicating with the internal casing by means of a respective path of the fumes, it is possible to obtain greater homogeneity and uniformity of temperature therein, and consequently a better cooking of baked products.

In accordance with another aspect of the present invention, the transport means are configured to advance the shelves in the working direction along a path which has a forward segment, from the front entrance aperture of said cooking chamber to an opposite end, and an opposite return segment.

A purpose of the present invention is also an industrial cooking line for cooking food products comprising one or more cooking ovens according to the invention, an apparatus for loading and unloading food products cooperating with the front entrance aperture and one or more apparatuses for feeding fuel into one or more combustion chambers.

Another purpose of the present invention is a functioning method for an oven, in which the method provides:
- to advance the food products in the internal casing along a working direction by means of the transport means;
- to generate combustion fumes by means of the heat generating source of the at least one combustion chamber;
- to cause, by means of the suction mouths of suction means disposed inside the bulk of the internal casing, a forced drawing of the fumes along at least one path of the combustion fumes which develops from the outlet aperture of the at least one combustion chamber along the lower interspace, up to the at least one upper passage, entering inside the internal casing according to a direction transverse to the working direction;
- to heat, by means of the combustion fumes, the external surface of the bottom wall which radiates heat toward the inside of the internal casing and to hit at least part of the food products with the combustion fumes, entering from the at least one upper passage.

According to another aspect of the invention, the method provides to generate combustion fumes by means of two heat generating sources of respective two combustion chambers, in which said combustion fumes enter respective parts in which the lower interspace is subdivided and follow respective paths of the combustion fumes which develop along the respective parts, ascend along said lateral interspaces and, through respective upper passages, enter inside the internal casing according to substantially parallel directions and opposite senses to each other and both transverse to said working direction.

According to one aspect of the invention, the method according to the invention provides to advance said food products along a forward segment from the front entrance aperture of said cooking chamber to an opposite end and along an opposite return segment.

### DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a cross sectional view of an oven for cooking food products according to the present invention, according to the section line I-I of fig. 3;
- fig. 2 is a longitudinal sectional view of the oven of fig. 1, along the section line II-II of fig. 3;
- fig. 3 is a top view of the oven of fig. 1;
- fig. 4 is a top view of the oven of an oven for cooking food products according to another embodiment;
- fig. 5 is a cross sectional view of the oven of fig. 4, along the section line V-V;
- fig. 6 is a longitudinal sectional view of the oven of fig. 4, along the section line VI-VI;
- fig. 7 is a longitudinal sectional view of an oven for cooking food products, according to a further embodiment;
- fig. 8 is a cross sectional view of a detail of an industrial line for cooking food products of fig. 9;
- fig. 9 is a sectional view of the industrial line for cooking food products, according to the present invention.

We must clarify that in the present description the phraseology and terminology used, as well as the figures in the attached drawings also as described, have the sole function of better illustrating and explaining the present invention, their function being to provide a non-limiting example of the invention itself, since the scope of protection is defined by the claims.

To facilitate comprehension, the same reference numbers have been used, where possible, to identify identical common elements in the drawings. It is understood that elements and characteristics of one embodiment can be conveniently combined or incorporated into other embodiments without further clarifications.

### DESCRIPTION OF SOME EMBODIMENTS OF THE PRESENT INVENTION

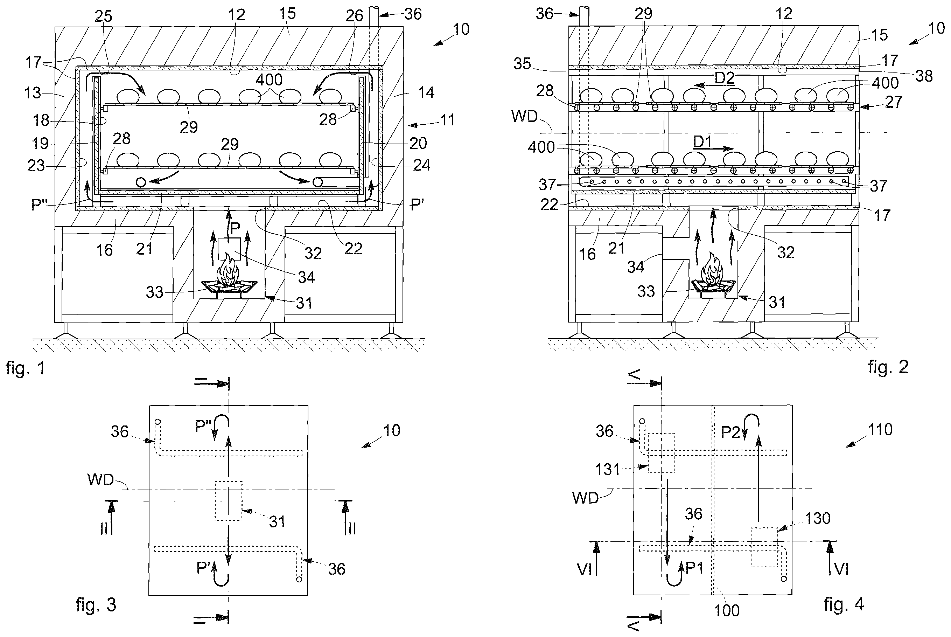

With reference to fig. 1, an industrial oven 10 for cooking food products 400 according to the present invention, in accordance with a first embodiment, comprises an external casing 11 internally having a cooking chamber 12 delimited by lateral walls 13, 14, by an upper wall 15 and a bottom wall 16 and having a front entrance aperture 35. The lateral walls 13, 14 and the upper wall 15 can be at least lined in refractory material 17, on their side facing the inside of the cooking chamber 12.

The oven 10 comprises an internal casing 18 of refractory material delimited by respective lateral walls 19, 20 and by a bottom wall 21.

The internal casing 18 is disposed in the cooking chamber 12, supported with respect to the bottom wall 16 of the cooking chamber 12 so as to be distanced therefrom, defining a lower interspace 22.

The internal casing 18 is laterally sized so that at least one lateral wall 19 is distanced from the respective lateral wall 13 of the cooking chamber 12, defining a lateral interspace 23 in communication with the lower interspace 22.

The other lateral wall 20 can be distanced from the respective lateral wall 14 of the cooking chamber 12, defining a respective lateral interspace 24.

At least one of the two lateral interspaces 23 or 24 can be separated from the lower interspace 22 by a separating element.

The upper edges of the lateral walls 19, 20 of the internal casing 18 are distanced from the upper wall 15 of the cooking chamber 12, defining at least one upper passage 25 communicating on one side with the lateral interspace 23 and on the other side with the inside of the internal casing 18.

The oven 10 comprises transport means 27 (fig. 2) positioned in the internal casing 18 and configured to advance the food products 400 along a working direction WD.

The transport means 27 are preferably idle roller conveyors, although they can be made differently.

The transport means 27 are provided with a plurality of advancement bearings 28 and are provided with a plurality of shelves 29 for supporting the food products 400.

The bearings 28 are adapted to rotate around an axis thereof to advance the shelves 29 in a working direction WD along a path which can have a forward segment D1, from the front entrance aperture 35 of the cooking chamber 12 to an opposite end, and an opposite return segment D2 (fig. 2).

Preferably, the bearings 28 cooperate with the shelves 29 only in correspondence with a peripheral part of the shelves 29, in correspondence with the lateral walls 19, 20 of the internal casing 18. Advantageously, the bearings 28 have reduced friction with the shelves 29, reducing the power required to move them. Alternatively, the bearings 28 can be replaced by rollers, which cross the entire internal casing 18, or by similar elements.

Preferably and as shown in the figures, the cooking chamber 12 has a lower cooking level, corresponding to the forward segment D1, and an upper cooking level, corresponding to the return segment D2. According to embodiment variants not illustrated in the figures, the forward segment D1 is positioned above and the return return segment D2 is positioned below, or they are side by side or similar. Advantageously, the oven 10 thus assumes a compact configuration. Furthermore, it is possible to better manage the cooking on all sides of the food products 400, suitably configuring the internal disposition of the cooking chamber 12 and controlling the circulation volumes and the fume temperatures.

According to a further embodiment not illustrated in the figures, the oven 10 can also be a "pass through" type oven, comprising an entrance side and an exit side different from the entrance side and a single flow level, in which the working flow follows a single forward segment.

The oven 10 comprises at least one combustion chamber 31, disposed below a horizontal lying plane of the bottom wall 21 of the internal casing 18 and having an aperture 32 for the outlet of the combustion fumes in direct communication with the lower interspace 22.

According to embodiments, only one combustion chamber 31 is provided, which is preferably positioned centrally with respect to the bulk of the oven 10, but can also be positioned differently.

If the combustion chamber 31 is centrally positioned, a greater heat transfer to the bottom wall 21 of the internal casing 18 is obtained, helping to make the cooking of the food products 400 more effective.

The lower interspace 22 can advantageously extend below the entire bottom wall 21 so as to uniformly distribute the heat towards a lower zone of all the food products 400 disposed in the cooking chamber 12.

If the combustion chamber 31 is positioned centrally, preferably neither of the two lateral interspaces 23, 24 is separated from the lower interspace 22. A path P of the combustion fumes, exiting from the aperture 32 of the combustion chamber 31, can thus be subdivided into two branches P' and P", which respectively transit in said two interspaces 23, 24 and cross respective upper passages 25, 26 entering the internal casing 18 in opposite and transverse directions to the working direction WD.

The or each combustion chamber 31 is provided with a fuelled heat generating source 33, e.g., a flame produced by a gas burner, pellet or other, or a hearth produced by the combustion of biomass, e.g., logs of wood or the like.

The oven 10 comprises suction means 36 having suction mouths 37 (fig. 2) disposed inside the bulk of the internal casing 18.

The suction mouths 37 are preferably disposed under at least one of either the forward segment D1 and the return segment D2. Advantageously, thereby at least one of the two segments D1, D2 is hit by the combustion fumes, which thus lap the food products 400 from above.

The suction means 36 are configured to cause a forced drawing of the combustion fumes generated by the heat generating source 33 along the path P of the combustion fumes which develops from the outlet aperture 32 of the combustion chamber 31 along the lower interspace 22, ascending at least along the lateral interspace 23 and, through at least the upper passage 25, entering inside the internal casing 18 up to the suction mouths 37. Advantageously, the shelves 29 can be distanced from each other, to facilitate the circulation of fumes.

The oven 10 further comprises pipes provided with fans which withdraw comburent air from the outside and bring it to the combustion chamber 31.

The path P of the combustion fumes along said lower interspace 22 can develop at least in part along a direction transverse to the working direction WD.

With reference to figs. 4 to 6 and in accordance with a second embodiment, an oven 110 comprises two combustion chambers 130, 131.

The combustion chambers 130, 131 are preferably positioned, below the horizontal lying plane of the bottom wall 21, respectively in correspondence with opposite sides of the oven 110, for example (fig. 4) each in correspondence with a respective lateral wall 13, 14 of the cooking chamber 12.

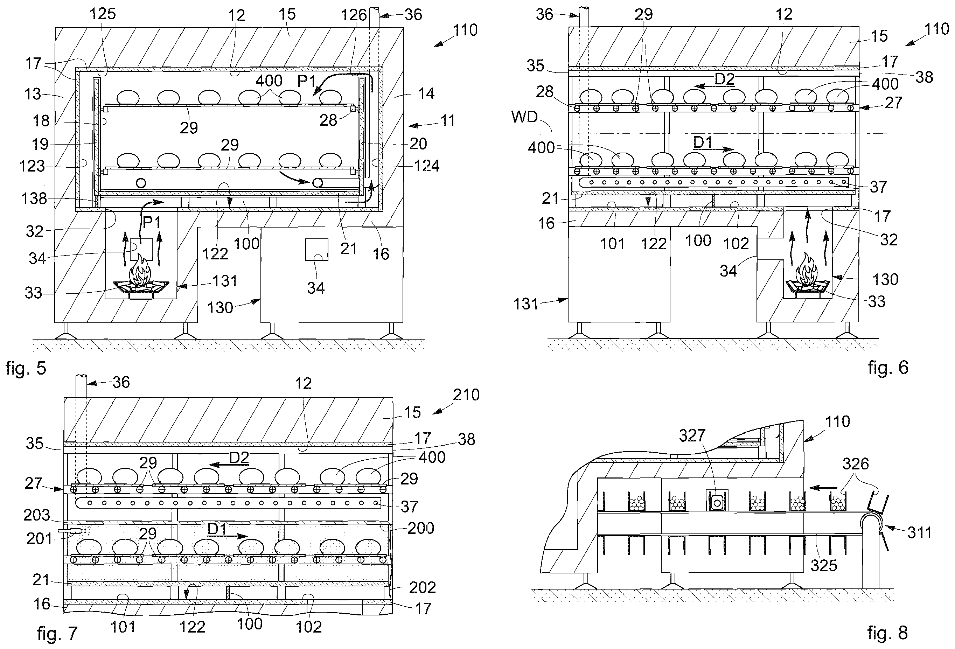

The oven 110 comprises a lower interspace 122 divided, by means of a separation foil 100 located transversely to the working direction WD, into corresponding two parts 101, 102 (fig. 6).

The lower interspace 122 as a whole, possibly subdivided into the two parts 101, 102, can advantageously extend below the entire bottom wall 21 so as to uniformly distribute the heat towards the lower zone of the food products 400.

Each part 101, 102 communicates with a corresponding lateral interspace 123, 124 and with corresponding upper passages 125, 126, communicating on one side with the lateral interspaces 123, 124 and on the other side with the inside of the internal casing 18.

Paths P1, P2 (fig. 4) of the combustion fumes which develop from the outlet aperture 32 of the combustion chamber 31 along the parts 101, 102 of the lower interspace 122, ascending along the lateral interspaces 123, 124 and, through the upper passages 125, 126, entering inside the internal casing 18 up to the suction mouths 37, are thus defined.

The lateral interspaces 123, 124 can be separated from the lower interspace 122 by a separating element 138 (Fig. 5).

In particular, separating elements 138 are provided which respectively separate one of the parts 101, 102 of the lower interspace 122 from the lateral interspace 123, 124 communicating with the other part 102, 101. Thereby, each part 101, 102 is connected to a single lateral interspace 123, 124 and the two flows of the combustion fumes remain substantially separated along the respective paths P1, P2 up to the internal casing 18.

Inside the internal casing 18, the paths P1, P2 move according to substantially parallel directions and opposite senses to each other.

The aforesaid directions are both substantially transverse to the working direction WD. Advantageously, it is thereby possible to cook by means of an enveloping heat, first from one sense by means of the air exiting from one combustion chamber 130 and then from the other sense by means of the air exiting from the other combustion chamber 131, for a uniform cooking.

With reference to fig. 7 and in accordance with a third embodiment, an oven 210 comprises an evaporation chamber 200 positioned inside the cooking chamber 12. The oven 210 is thus advantageously configured for cooking the food products 400 in a humid environment.

The evaporation chamber 200 comprises a steam emission device 201. The evaporation chamber 200 can be a through chamber and closable by means of separating elements 202, so as to be isolated from the combustion fumes and indirectly heated. Through chamber means a box-shaped chamber, having two inlet and outlet apertures, preferably one opposite the other.

The evaporation chamber 200 is delimited above by a separation wall 203; below and laterally it can be delimited by the lateral walls 19, 20 and by the bottom wall 21 of the internal casing 18 or it can be delimited by respective walls of the evaporation chamber 200.

The separating elements 202 can be a sliding door, a curtain made of heat-resistant material such as Teflon, combinations thereof or the like, openable for the passage of the shelves 29.

An aforesaid oven 210 comprising an evaporation chamber 200 can be defined as a humid cooking oven. Conversely, an oven 10, 110 not comprising an evaporation chamber 200 can be defined a dry cooking oven.

In the case of a humid cooking oven 210 in which the evaporation chamber is positioned in correspondence with a lower forward segment D1, the suction mouths 37 are disposed below one of the segments D1, D2 but above the other segment D2, D1, i.e., in an intermediate position between the two segments D1, D2. In fact, the evaporation chamber 200 is closed at the top, not allowing the passage of combustion fumes.

In the case of a dry cooking oven 10, 110, the suction mouths 37 are disposed below the lower segment of the segments D1, D2 (figs. 2 and 6). The combustion fumes can thereby hit the food products 400 on both segments D1, D2, optimizing the cooking.

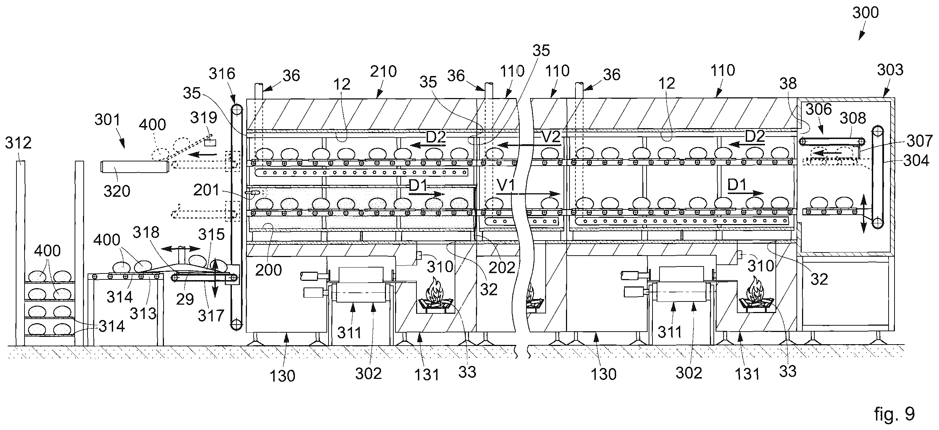

The present invention further concerns an industrial line 300 for cooking food products 400 (fig. 9). The line 300 can be a modular line, i.e., modular by means of one or more modules, understood as cooking ovens 10, 110, 210.

The line 300 comprises, in addition to the one or more modules 10, 110, 210, an apparatus 301 for loading and unloading food products 400 and one or more apparatuses 302 for feeding fuel into one or more combustion chambers (31, 130, 131).

The ovens 10, 110, 210 can comprise both a front entrance aperture 35, with which the loading and unloading apparatus 301 is adapted to cooperate, and a rear aperture 38 on the opposite end of the cooking chamber 12.

If the line 300 comprises several ovens 10, 110, 210 located in succession, the rear aperture 38 of one oven 10, 110, 210 is located in communication with the front entrance aperture 35 of the next oven 10, 110, 210 so as to put the respective cooking chambers 12 in communication and allow the transit of the food products 400 through each of them.

In particular, the line 300 can comprise at least a first humid cooking oven 210 and at least one subsequent dry cooking oven 10, 110. Advantageously, the line 300 can thus allow steam cooking for the surface browning of the food products 400 and dry cooking for their internal uniform cooking.

The line 300 has two cooking levels in correspondence with each of which said food products 400 are moved in a forward sense V1 and in an opposite return sense V2. By way of example, one level can be a lower level corresponding to the forward segment D1, the other can be an upper level corresponding to the return segment D2 (fig. 9), but the cooking levels can also be reversed or side by side. Alternatively, the line 300 can also be of the "pass through" type, comprising an entrance side and an exit side different from the entrance side and a single flow level, in which the working flow follows a single forward segment.

The loading and unloading apparatus 301 comprises or cooperates with one or more external storage warehouses and/or conveyor belts 312, 313 of supports 314 on which the products to be cooked 400 are positioned and leavened.

It further comprises means for transferring the products to be cooked 400 from the aforesaid leavening supports 314 to the cooking shelves 29 which will circulate inside the oven(s) 10, 110, 210. The transfer means can comprise a "pick and place" device 315 adapted to move a conveyor which picks up the products to be cooked 400 from the leavening supports 314 and deposits them on the cooking shelves 29.

The loading and unloading apparatus 301 comprises an insertion/extraction element 316, comprising a double-belt transport system 317 with cleat 318, or the like, adapted to support and move the shelves 29 entering or exiting the oven 10, 110, 210. The insertion/extraction element 316 further comprises means for transferring the shelf 29 to/from the first oven 10, 110, 210 of the line 300.

The insertion/extraction element 316 can be movable between two or more positions, for example a first and a second position in correspondence with the aforesaid cooking levels respectively for loading and unloading the shelves 29 into/from the oven 10, 110, 210. It can comprise a third position in correspondence with a "shelf loading" position, in which the "pick and place" device 315 can be configured to pick up the products to be cooked 400 from the leavening supports 314 and deposit/load them onto the cooking shelves 29 present on the insertion/extraction element 316.

The insertion/extraction element 316 can be configured to move in correspondence with the aforesaid first position, in which the cleat 318 pushes the shelf 29 into the first oven 10, 110, 210. The insertion/extraction element 316 can be configured to move in correspondence with the aforesaid second position, in which the shelf is pushed from the first oven 10, 110, 210 to the transport system 317. The loading and unloading apparatus 301 can then comprise means for moving the food products 400, for example a pneumatic lift 319, to lift the shelf 29 from one side and allow the sliding of the food products 400 onto the distancing transfer means 320.

The line 300 comprises a movement apparatus 303 for moving the food products 400 between the aforesaid cooking levels. For example, the movement apparatus 303 can move vertically between a lower and an upper level.

The movement apparatus 303 can be disposed in correspondence with the rear aperture 38 of the or of the last oven 10, 110, 210 of the line 300.

The line 300 further comprises thrust means 306 for thrusting the food products 400, previously exited from the forward segment D1 and entered in the movement apparatus 303, from there back inside the cooking chamber 12. The thrust means 306 can comprise a thrust cleat 307 mounted on a motorized belt system 308 for thrusting the shelves 29 or the like.

The fuel feed apparatus 302 is configured to automatically feed the one or more combustion chambers 31, 130, 131.

The feed apparatus 302 comprises temperature monitoring means 310 for regulating the feeding of fuel and automated insertion means 311 of said fuel into the one or more combustion chambers 31, 130, 131.

Preferably, if the fuel is wood, the insertion means 311 comprise (fig. 8) a conveyor belt 325 provided with pockets 326 in which the wood is positioned. They further comprise pushing means 327 of the wood in the combustion chamber 31, 130, 131, which can be driven to thrust when a door 34 of the combustion chamber 31, 130, 131 is open.

The functioning of the oven 10, 110, 210 described so far, which corresponds to the method according to the present invention, comprises the following steps.

The method provides to generate combustion fumes by means of the heat generating source 33.

The method provides to advance the food products 400 along a working direction WD inside the internal casing 18.

The method provides to cause, by means of the suction mouths 37 disposed inside the bulk of the internal casing 18, a forced drawing of combustion fumes generated by the heat generating source 33 along a path of the combustion fumes which develops from the outlet aperture 32 of the combustion chamber 31, 130, 131 along the lower interspace 22, ascending at least along the lateral interspace 23 and, through at least the upper passage 25, entering inside the internal casing 18 up to the suction mouths 37.

The method provides to heat, by means of the combustion fumes passing along the lower interspace 22, the external surface of the bottom wall 21 of the internal casing 21, directly lapped by the combustion fumes;
The method provides to radiate heat from the bottom wall 21 towards the inside of the internal casing 18, for cooking the food products 400 from below.

In particular, it provides to radiate heat from the bottom wall 21 for cooking food products 400 present on the forward segment D1 and/or return segment D2 where present.

The method provides to directly hit at least part of the food products 400 present in the internal casing 18 with the combustion fumes entering at least from the upper passage 25 into the internal casing 18.

In particular, the combustion fumes can directly hit at least one of the forward segment D1 and/or return segment D2 where present.

If the suction mouths 37 are positioned between the forward segment D1 and the return segment D2 and these are positioned one above and one below, the combustion fumes will hit the food products 400 located in correspondence with the upper segment D1 or D2. If the suction mouths 37 are positioned below both the forward segment D1 and the return segment D2, the combustion fumes will hit all the food products 400 present in the casing 18.

The method provides to move, by means of the transport means 27 positioned in the internal casing 18, the food products 400 positioned on the plurality of support shelves 29, in a working direction WP along the path which has the forward segment D1, from the front entrance aperture of the cooking chamber 12 to an opposite end, and the opposite return segment D2.

According to further embodiments, if the oven 110, 210 comprises two combustion chambers 130, 131, the method provides to generate combustion fumes by means of two heat generating sources 33 of the respective two combustion chambers 130, 131.

In this case the combustion fumes enter one of the respective parts 101, 102 of the lower interspace 122 and follow respective paths (P1, P2) of the combustion fumes which develop along the respective parts 101, 102, ascend along the lateral interspaces 123, 124 and, through the upper passages 125, 126, enter inside the internal casing 18 according to substantially parallel directions and opposite senses to each other and both transverse to the working direction WD.

It is clear that modifications and/or additions of parts and/or steps may be made to the oven 10, 110, 210, to the line 300 and to the method as described heretofore, without departing from the field and scope of the present invention, as defined by the claims.

It is also clear that, although the present invention has been described with reference to some specific examples, a person of skill in the art shall certainly be able to achieve other equivalent forms of ovens for cooking food products, lines comprising the same and related functioning method, having the characteristics as set forth in the claims and hence all coming within the field of protection defined thereby.

In the following claims, the sole purpose of the references in brackets is to facilitate their reading and they must not be considered as restrictive factors with regard to the field of protection defined by the claims.

## Claims

1. Oven (10, 110, 210) for cooking food products (400) comprising an external casing (11) internally having a cooking chamber (12) delimited by lateral walls (13, 14), by an upper wall (15) and a bottom wall (16) and having a front entrance aperture (35), wherein said oven comprises:
- an internal casing (18) disposed in said cooking chamber (12) supported with respect to said bottom wall (16) so as to define a lower interspace (22, 122) communicating with at least one lateral interspace (23, 24, 123, 124) given by the distancing between at least one lateral wall (19, 20) of said internal casing (18) and said one lateral wall (13, 14), wherein said lateral walls (19,20) comprise upper edges distanced from said upper wall (15) defining at least one upper communication passage (25, 26, 125, 126) between said at least one lateral interspace (23, 24, 123, 124) and the inside of said internal casing (18);
- transport means (27) positioned in said internal casing (18) and provided with a plurality of shelves (29) for supporting said food products (400), able to advance in a working direction (WD),
- at least one combustion chamber (31, 130, 131), provided with a heat generating source (33), disposed under a horizontal lying plane of said bottom wall (21) and having an aperture (32) for the outlet of the combustion fumes in direct communication with said lower interspace (22, 122);
- suction means (36) having suction mouths (37) disposed inside the bulk of said internal casing (18) and configured to cause a forced drawing of said combustion fumes along at least one path (P, P1, P2) which develops from said outlet aperture (32) to said at least one upper passage (25, 26 125, 126), entering inside said internal casing (18) according to a direction transverse to said working direction (WD).

2. Oven (10, 110, 210) as in claim 1, **characterized in that** said support shelves (29) are configured to advance in said working direction (WD) along a path which has a forward segment (D1), from said front entrance aperture (35) to the opposite end, and an opposite return segment (D2) **and in that** said suction mouths (37) are disposed under at least one of either said forward segment (D1) and said return segment (D2).

3. Oven (10, 110, 210) as in claim 2, **characterized in that** said forward (D1) and return (D2) segments are disposed one above the other or are side by side with each other in said chamber (12).

4. Oven (10) as in any one of the preceding claims 1 to 3, **characterized in that** there is only one combustion chamber (31) positioned centrally with respect to the bulk of the oven (10) and the bottom wall (16).

5. Oven (110, 210) as in any one of the preceding claims 1 to 3, **characterized in that** it comprises two combustion chambers (31, 130, 131) and said lower interspace (22, 122) is subdivided, by means of a separation foil (100) located transversely to said working direction (WD), into corresponding two parts (101, 102), each communicating with a corresponding lateral interspace (23, 24, 123, 124) and a corresponding upper passage (25, 26, 125, 126) with the inside of said internal casing (18), defining paths (P1, P2) of the combustion fumes which develop from the outlet apertures (32) of said combustion chambers (31, 130, 131) along said parts (101, 102), ascending along said lateral interspaces (23, 24, 123, 124) and, through said upper passages (25, 26, 125, 126), entering inside said internal casing (18) according to substantially parallel directions and opposite senses one to the other and both transverse to said working direction (WD).

6. Oven (110, 210) as in claim 5, **characterized in that** it comprises separating elements (138) which separate one of said parts (101, 102) of said lower interspace (22, 122) from the lateral interspace (123, 124) communicating with the other part (102, 101).

7. Oven (110, 210) as in any one of claims 5 or 6, **characterized in that** said combustion chambers (130, 131) are positioned, below the horizontal lying plane of the bottom wall (21), respectively in correspondence with opposite sides of the oven (110, 210), each in correspondence with a respective lateral wall (13, 14) of said cooking chamber (12).

8. Oven (210) as in any one of claims 1 to 7, **characterized in that** it comprises an evaporation chamber (200) positioned inside said cooking chamber (12), having a steam emission device (201), through and closable by means of closing elements (202) for cooking in a humid environment.

9. Industrial cooking line (300) for cooking food products (400), **characterized in that** it comprises one or more cooking ovens (10, 110, 210) as in any one of claims 1 to 8, an apparatus (301) for loading and unloading food products (400) cooperating with a front entrance aperture (35) and one or more apparatuses (302) for feeding fuel into one or more combustion chambers (31, 130, 131).

10. Cooking line (300) as in claim 9, **characterized in that** it comprises at least a first oven (210) comprising an evaporation chamber (200) and at least one subsequent oven (10, 110) not comprising an evaporation chamber (200).

11. Cooking line (300) as in claim 9 or 10, **characterized in that** said one or more cooking ovens (10, 110, 210) each comprise a cooking chamber (12) having two cooking levels in correspondence with each of which said food products (400) are moved in a forward sense (V1) along a forward segment (D1) and in an opposite return sense (V2) along a return segment (D2), **and in that** said loading and unloading apparatus (301) comprises an element (304) mobile at least between two positions in correspondence with said cooking levels, respectively for loading and unloading said food products (400) in correspondence with the front entrance aperture (35).

12. Cooking line (300) as in claim 11, **characterized in that** it comprises a movement apparatus (303) for moving said food products (400) between said cooking levels and thrust means (306) for thrusting said food products (400) from said movement apparatus (303) on said support shelves (29) inside said cooking chamber (12).

13. Line (300) as in any one of claims 9 to 12, **characterized in that** said feed apparatus (302) is configured to automatically feed said one or more combustion chambers (31, 130, 131) **and that** it comprises temperature monitoring means (310) for regulating the fuel supply and automated insertion means (311) to insert said fuel into said one or more combustion chambers (31, 130, 131).

14. Functioning method for an oven (10, 110, 210) as in claims from 1 to 8, **characterized in that** it provides:
- to advance said food products (400) in said internal casing (18) along a working direction (WD) by means of said transport means (27);
- to generate combustion fumes by means of said heat generating source (33) of said at least one combustion chamber (31, 130, 131);
- to cause, by means of said suction mouths (37) of suction means (36) disposed inside the bulk of said internal casing (18), a forced drawing of said fumes along at least one path (P, P1, P2) of the combustion fumes which develops from said outlet aperture (32) of said at least one combustion chamber (31, 130, 131) along said lower interspace (22, 122), up to said at least one upper passage (25, 26, 125, 126), entering inside said internal casing (18) according to a direction transverse to said working direction (WD);
- to heat, by means of said combustion fumes, the external surface of said bottom wall (21) which radiates heat toward the inside of said internal casing (18) and to hit at least part of the food products (400) with said combustion fumes, entering from said at least one upper passage (25, 26, 125, 126).

15. Method as in claim 14, **characterized in that** it provides to generate combustion fumes by means of two heat generating sources (33) of respective two combustion chambers (31, 130, 131), wherein said combustion fumes enter respective parts (101, 102) of said lower interspace (122) subdivided by a separation foil (100) and follow respective paths (P1, P2) of the combustion fumes which develop along the respective parts (101, 102), ascend along said lateral interspaces (23, 24, 123, 124) and, through said upper passages (25, 26, 125, 126), enter inside said internal casing (18) according to substantially parallel directions and opposite senses to each other and both transverse to said working direction (WD).

## Patentansprüche

1. Ofen (10, 110, 210) zum Garen von Lebensmitteln (400), umfassend ein Außengehäuse (11), das im Inneren eine Garraumkammer (12) aufweist, welche durch Seitenwände (13, 14), eine obere Wand (15) und eine Bodenwand (16) begrenzt ist und eine vordere Eintrittsöffnung (35) besitzt, wobei der Ofen Folgendes umfasst:
- ein Innengehäuse (18), das in der Garraumkammer (12) angeordnet und gegenüber der Bodenwand (16) so abgestützt ist, dass ein unterer Zwischenraum (22, 122) gebildet ist, der mit mindestens einem seitlichen Zwischenraum (23, 24, 123, 124), der durch den Abstand zwischen mindestens einer Seitenwand (19, 20) des Innengehäuses (18) und der einen Seitenwand (13, 14) entsteht, in Verbindung steht, wobei die Seitenwände (19, 20) obere Kanten aufweisen, die von der oberen Wand (15) beabstandet sind und mindestens einen oberen Verbindungsdurchgang (25, 26, 125, 126) zwischen dem mindestens einem seitlichen Zwischenraum (23, 24, 123, 124) und dem Inneren des Innengehäuses (18) definieren;
- Transporteinrichtungen (27), die in dem Innengehäuse (18) angeordnet sind und mit einer Mehrzahl von Trageböden (29) zum Aufnehmen der Lebensmittel (400) versehen sind, welche in einer Arbeitsrichtung (WD) vorwärtsbewegt werden können,
- mindestens eine Brennkammer (31, 130, 131), die mit einer Wärmeerzeugungsquelle (33) ausgestattet ist, unterhalb einer horizontal verlaufenden Ebene der Bodenwand (21) angeordnet ist und eine Öffnung (32) für den Austritt der Verbrennungsgase aufweist, die in direkter Verbindung mit dem unteren Zwischenraum (22, 122) steht;
- Saugeinrichtungen (36) mit Saugöffnungen (37), die im Inneren des Großteils des Innengehäuses (18) angeordnet sind und so ausgelegt sind, dass sie ein erzwungenes Ansaugen der Verbrennungsgase entlang mindestens eines Weges (P, P1, P2) bewirken, der sich von der Austrittsöffnung (32) bis zu dem mindestens einen oberen Durchgang (25, 26, 125, 126) erstreckt und dabei in das Innere des Innengehäuses (18) in einer zur Arbeitsrichtung (WD) quer verlaufenden Richtung eintritt.

2. Ofen (10, 110, 210) nach Anspruch 1, **dadurch gekennzeichnet, dass** die Trageböden (29) so ausgebildet sind, dass sie sich in der Arbeitsrichtung (WD) entlang eines Weges vorwärtsbewegen, der einen Vorlaufabschnitt (D1) von der vorderen Eintrittsöffnung (35) bis zum gegenüberliegenden Ende und einen entgegengesetzten Rücklaufabschnitt (D2) aufweist, und dass die Saugöffnungen (37) unter mindestens einem von dem Vorlaufabschnitt (D1) und Rücklaufabschnitt (D2) angeordnet sind.

3. Ofen (10, 110, 210) nach Anspruch 2, **dadurch gekennzeichnet, dass** die Vorlauf- (D1) und Rücklaufabschnitte (D2) in der Kammer (12) übereinander oder nebeneinander angeordnet sind.

4. Ofen (10) nach einem der vorhergehenden Ansprüche 1 bis 3, **dadurch gekennzeichnet, dass** lediglich eine Brennkammer (31) vorhanden ist, die zentral in Bezug auf den Großteil des Ofens (10) und die Bodenwand (16) angeordnet ist.

5. Ofen (110, 210) nach einem der vorhergehenden Ansprüche 1 bis 3, **dadurch gekennzeichnet, dass** er zwei Brennkammern (31, 130, 131) umfasst und der untere Zwischenraum (22, 122) durch eine quer zur Arbeitsrichtung (WD) angeordnete Trennfolie (100) in zwei entsprechende Teile (101, 102) unterteilt ist, wobei jeder Teil mit einem entsprechenden seitlichen Zwischenraum (23, 24, 123, 124) und einem entsprechenden oberen Durchgang (25, 26, 125, 126) mit dem Inneren des Innengehäuses (18) in Verbindung steht und Wege (P1, P2) für die Verbrennungsgase definiert sind, die sich von den Austrittsöffnungen (32) der Brennkammern (31, 130, 131) entlang der Teile (101, 102) erstrecken, entlang der seitlichen Zwischenräume (23, 24, 123, 124) aufsteigen und durch die oberen Durchgänge (25, 26, 125, 126) in das Innere des Innengehäuses (18) in im Wesentlichen parallelen Richtungen und entgegengesetzten Richtungen zueinander sowie beide quer zur Arbeitsrichtung (WD) eintreten.

6. Ofen (110, 210) nach Anspruch 5, **dadurch gekennzeichnet, dass** er Trennelemente (138) umfasst, die einen der Teile (101, 102) des unteren Zwischenraums (22, 122) von dem seitlichen Zwischenraum (123, 124) trennen, der mit dem jeweils anderen Teil (102, 101) in Verbindung steht.

7. Ofen (110, 210) nach einem der Ansprüche 5 oder 6, **dadurch gekennzeichnet, dass** die Brennkammern (130, 131) unterhalb der horizontalliegenden Ebene der Bodenwand (21) jeweils in Übereinstimmung mit gegenüberliegenden Seiten des Ofens (110, 210) angeordnet sind, jeweils in Übereinstimmung mit einer entsprechenden Seitenwand (13, 14) der Garraumkammer (12).

8. Ofen (210) nach einem der Ansprüche 1 bis 7, **dadurch gekennzeichnet, dass** er eine innerhalb der Garraumkammer (12) angeordnete Verdampfungskammer (200) umfasst, die mit einer Dampfaustrittsvorrichtung (201) versehen ist und mittels Schließelementen (202) durchgängig und verschließbar ist, zum Garen in einer feuchten Umgebung.

9. Industrielle Garlinie (300) zum Garen von Lebensmitteln (400), **dadurch gekennzeichnet, dass** sie einen oder mehrere Garöfen (10, 110, 210) nach einem der Ansprüche 1 bis 8, eine Vorrichtung (301) zum Be- und Entladen von Lebensmitteln (400), die mit einer vorderen Eintrittsöffnung (35) zusammenwirkt, sowie eine oder mehrere Vorrichtungen (302) zur Brennstoffbeschickung in eine oder mehrere Brennkammern (31, 130, 131) umfasst.

10. Garlinie (300) nach Anspruch 9, **dadurch gekennzeichnet, dass** sie mindestens einen ersten Ofen (210) mit einer Verdampfungskammer (200) und mindestens einen nachfolgenden Ofen (10, 110) ohne Verdampfungskammer (200) umfasst.

11. Garlinie (300) nach Anspruch 9 oder 10, **dadurch gekennzeichnet, dass** die ein oder mehrere Garöfen (10, 110, 210) jeweils eine Garraumkammer (12) mit zwei Garstufen umfassen, entlang derer die Lebensmittel (400) jeweils in Vorwärtsrichtung (V1) entlang eines Vorlaufabschnitts (D1) und in entgegengesetzter Rücklaufrichtung (V2) entlang eines Rücklaufabschnitts (D2) bewegt werden, und dass die Be- und Entladevorrichtung (301) ein Element (304) umfasst, das zumindest zwischen zwei Positionen in Übereinstimmung mit den Garstufen beweglich ist, jeweils zum Be- und Entladen der Lebensmittel (400) in Übereinstimmung mit der vorderen Eintrittsöffnung (35).

12. Garlinie (300) nach Anspruch 11, **dadurch gekennzeichnet, dass** sie eine Bewegungsvorrichtung (303) zum Bewegen der Lebensmittel (400) zwischen den Garstufen und Schubeinrichtungen (306) zum Schieben der Lebensmittel (400) von der Bewegungsvorrichtung (303) auf die Trageböden (29) innerhalb der Garraumkammer (12) umfasst.

13. Linie (300) nach einem der Ansprüche 9 bis 12, **dadurch gekennzeichnet, dass** die Beschickungseinrichtung (302) so ausgelegt ist, dass sie die eine oder mehrere der Brennkammern (31, 130, 131) automatisch beschickt, und dass sie Temperaturüberwachungseinrichtungen (310) zur Regelung der Brennstoffzufuhr sowie automatisierte Einführeinrichtungen (311) zum Einbringen des Brennstoffs in die eine oder mehrere Brennkammern (31, 130, 131) umfasst.

14. Betriebsverfahren für einen Ofen (10, 110, 210) nach den Ansprüchen 1 bis 8, **dadurch gekennzeichnet, dass** es Folgendes vorsieht:
- die Lebensmittel (400) mittels der Transporteinrichtungen (27) im Innengehäuse (18) entlang einer Arbeitsrichtung (WD) vorwärtszubewegen;
- Verbrennungsgase mittels der Wärmeerzeugungsquelle (33) in mindestens einer der Brennkammer (31, 130, 131) zu erzeugen;
- durch die Saugöffnungen (37) der im Inneren des Großteils des Innengehäuses (18) angeordneten Saugeinrichtungen (36) ein erzwungenes Ansaugen der Gase entlang mindestens eines Weges (P, P1, P2) der Verbrennungsgase zu bewirken, der sich von der Austrittsöffnung (32) der mindestens einen Brennkammer (31, 130, 131) entlang des unteren Zwischenraums (22, 122) bis zu dem mindestens einen oberen Durchgang (25, 26, 125, 126) erstreckt und dabei in das Innere des Innengehäuses (18) in einer zur Arbeitsrichtung (WD) quer verlaufenden Richtung eintritt;
- durch die Verbrennungsgase die Außenfläche der Bodenwand (21) zu erhitzen, welche Wärme in das Innere des Innengehäuses (18) abstrahlt, und mindestens einen Teil der Lebensmittel (400) mit den Verbrennungsgasen zu beaufschlagen, die durch den mindestens einen oberen Durchgang (25, 26, 125, 126) eintreten.

15. Verfahren nach Anspruch 14, **dadurch gekennzeichnet, dass** vorgesehen ist, Verbrennungsgase mittels zweier Wärmeerzeugungsquellen (33) der jeweiligen zwei Brennkammern (31, 130, 131) zu erzeugen, wobei die Verbrennungsgase in jeweilige Teile (101, 102) des durch eine Trennfolie (100) unterteilten unteren Zwischenraums (122) eintreten und jeweiligen Wegen (P1, P2) der Verbrennungsgase folgen, die sich entlang der jeweiligen Teile (101, 102) erstrecken, entlang der seitlichen Zwischenräume (23, 24, 123, 124) aufsteigen und durch die oberen Durchgänge (25, 26, 125, 126) in das Innere des Innengehäuses (18) in im Wesentlichen parallelen Richtungen und entgegengesetzten Richtungen zueinander sowie beide quer zur Arbeitsrichtung (WD) eintreten.

## Revendications

1. Four (10, 110, 210) pour la cuisson de produits alimentaires (400) comprenant une enveloppe extérieure (11) comportant intérieurement une chambre de cuisson (12) délimitée par des parois latérales (13, 14), par une paroi supérieure (15) et une paroi inférieure (16) et présentant une ouverture d'entrée frontale (35), dans lequel ledit four comprend :
- une enveloppe interne (18) disposée dans ladite chambre de cuisson (12), soutenue par rapport à ladite paroi inférieure (16) de manière à définir un espace intermédiaire inférieur (22, 122) communiquant avec au moins un espace intermédiaire latéral (23, 24, 123, 124) fourni par la distance entre au moins une paroi latérale (19, 20) de ladite enveloppe interne (18), et ladite paroi latérale (13, 14), dans laquelle lesdites parois latérales (19, 20) comprennent des bords supérieurs à distance de ladite paroi supérieure (15) définissant au moins un passage de communication supérieur (25, 26, 125, 126) entre ledit au moins un espace intermédiaire latéral (23, 24, 123, 124) et l'intérieur de ladite enveloppe interne (18) ;
- des moyens de transport (27) positionné dans ladite enveloppe interne (18) et doté d'une pluralité de tablettes (29) pour supporter lesdits produits alimentaires (400), capables d'avancer dans une direction de travail (WD),
- au moins une chambre de combustion (31, 130, 131), pourvue d'une source de production de chaleur (33), disposée sous un plan horizontal de ladite paroi inférieure (21) et dotée d'une ouverture (32) pour l'évacuation des fumées de combustion en communication directe avec ledit espace intermédiaire inférieur (22, 122) ;
- des moyens d'aspiration (36) comportant des bouches d'aspiration (37) disposées à l'intérieur de la masse de ladite enveloppe interne (18) et configurés pour provoquer une aspiration forcée desdites fumées de combustion le long d'au moins un chemin (P, P1, P2) qui se développe à partir de ladite ouverture d'évacuation (32) vers ledit au moins un passage supérieur (25, 26, 125, 126), pénétrant à l'intérieur de cette dernière enveloppe interne (18) selon une direction transversale à ladite direction de travail (WD).

2. Four (10, 110, 210) selon la revendication 1, **caractérisé en ce que** lesdites tablettes de support (29) sont configurés pour avancer dans ladite direction de travail (WD) le long d'un chemin qui a un segment aller (D1), de ladite ouverture d'entrée frontale (35) à l'extrémité opposée, et un segment de retour opposé (D2) et **en ce que** lesdites bouches d'aspiration (37) sont disposées sous au moins l'un des segments aller (D1) et retour (D2).

3. Four (10, 110, 210) selon la revendication 2, **caractérisé par le fait que** les segments aller (D1) et retour (D2) sont disposés l'un au-dessus de l'autre ou côte à côte l'un de l'autre dans ladite chambre (12).

4. Four (10) selon l'une quelconque des revendications précédentes 1 à 3, **caractérisé par le fait qu'**il n'y a qu'une seule chambre de combustion (31) positionnée au centre par rapport à la masse du four (10) et à la paroi inférieure (16).

5. Four (110, 210) selon l'une quelconque des revendications précédentes 1 à 3, **caractérisé en ce qu'**il comprend deux chambres de combustion (31, 130, 131) et que ledit espace intermédiaire inférieur (22, 122) est subdivisé, au moyen d'une feuille de séparation (100) située transversalement par rapport à ladite direction de travail (WD), en deux parties correspondantes (101, 102), chacune communiquant avec un espace intermédiaire latéral correspondant (23, 24, 123, 124) et un passage supérieur correspondant (25, 26, 125, 126) à l'intérieur de ladite enveloppe interne (18), définissant des chemins (P1, P2) des fumées de combustion qui se développent à partir des ouvertures de sortie (32) desdites chambres de combustion (31, 130, 131) le long desdites parties (101, 102), en remontant le long desdits espaces intermédiaires latéraux (23, 24, 123, 124) et, à travers lesdits passages supérieurs (25, 26, 125, 126), pénétrant à l'intérieur de ladite enveloppe interne (18) selon des directions sensiblement parallèles et des sens opposés l'un à l'autre et tous deux par rapport à ladite direction de travail (WD).

6. Four (110, 210) selon la revendication 5, **caractérisé en ce qu'**il comprend des éléments de séparation (138) qui séparent l'une desdites parties (101, 102) dudit espace intermédiaire inférieur (22, 122) de l'espace intermédiaire latéral (123, 124) communiquant avec l'autre partie (102, 101).

7. Four (110, 210) selon l'une quelconque des revendications 5 ou 6, **caractérisé en ce que** lesdites chambres de combustion (130, 131) sont positionnées, sous le plan horizontal de la paroi inférieure (21), respectivement en correspondance avec des côtés opposés du four (110, 210), chacun en correspondance avec une paroi latérale respective (13, 14) de ladite chambre de cuisson (12).

8. Four (210) selon l'une quelconque des revendications 1 à 7, **caractérisé en ce qu'**il comprend une chambre d'évaporation (200) placée à l'intérieur de ladite chambre de cuisson (12), dotée d'un dispositif d'émission de vapeur (201), traversante et pouvant être fermée au moyen d'éléments de fermeture (202) pour la cuisson en milieu humide.

9. Ligne de cuisson industrielle (300) pour la cuisson de produits alimentaires (400), **caractérisée en ce qu'**elle comprend un ou plusieurs fours de cuisson (10, 110, 210) selon l'une quelconque des revendications 1 à 8, un appareil (301) de chargement et de déchargement de produits alimentaires (400) coopérant avec une ouverture d'entrée frontale (35) et un ou plusieurs appareils (302) pour alimenter en carburant une ou plusieurs chambres de combustion (31, 130, 131).

10. Ligne de cuisson (300) selon la revendication 9, **caractérisée en ce qu'**elle comprend au moins un premier four (210) comprenant une chambre d'évaporation (200) et au moins un four suivant (10, 110) ne comprenant pas de chambre d'évaporation (200).

11. Ligne de cuisson (300) selon la revendication 9 ou 10, **caractérisée en ce que** ces un ou plusieurs fours de cuisson (10, 110, 210) comprennent chacun une chambre de cuisson (12) ayant deux niveaux de cuisson en correspondance avec chacun desquels lesdits produits alimentaires (400) sont déplacés dans un sens aller (V1) le long d'un segment aller (D1) et dans un sens retour opposé (V2) le long d'un segment retour (D2), et **en ce que** ledit appareil de chargement et de déchargement (301) comprend un élément (304) mobile au moins entre deux positions en correspondance avec lesdits niveaux de cuisson, respectivement pour charger et décharger lesdits produits alimentaires (400) en correspondance avec l'ouverture d'entrée frontale (35).

12. Ligne de cuisson (300) selon la revendication 11, **caractérisée par le fait qu'**elle comprend un appareil de mouvement (303) pour déplacer lesdits produits alimentaires (400) entre lesdits niveaux de cuisson et des moyens de poussée (306) pour pousser lesdits produits alimentaires (400) depuis ledit appareil de mouvement (303) sur lesdites tablettes de support (29) à l'intérieur de ladite chambre de cuisson (12).

13. Ligne (300) selon l'une quelconque des revendications 9 à 12, **caractérisée par le fait que** ledit appareil d'alimentation (302) est configuré pour alimenter automatiquement ladite ou lesdites chambres de combustion (31, 130, 131) et qu'il comprend des moyens de surveillance de la température (310) pour réguler l'alimentation en carburant et des moyens d'insertion automatisés (311) pour insérer ledit carburant dans ladite ou lesdites chambres de combustion (31, 130, 131).

14. Procédé de fonctionnement d'un four (10, 110, 210) selon les revendications 1 à 8, **caractérisé en ce qu'**il prévoit de :
- faire avancer lesdits produits alimentaires (400) dans ladite enveloppe interne (18) le long d'une direction de travail (WD) au moyen desdits moyens de transport (27)
- générer des fumées de combustion au moyen de ladite source de production de chaleur (33) de ladite au moins une chambre de combustion (31, 130, 131) ;
- provoquer, au moyen desdites bouches d'aspiration (37) des moyens d'aspiration (36) disposés à l'intérieur de la masse de ladite enveloppe interne (18), une aspiration forcée desdites fumées le long d'au moins un trajet (P, P1, P2) des fumées de combustion qui se développent à partir de ladite ouverture de sortie (32) de ladite au moins une chambre de combustion (31, 130, 131), le long dudit espace intermédiaire inférieur (22, 122), jusqu'audit au moins un passage supérieur (25, 26, 125, 126), entrant à l'intérieur de ladite enveloppe interne (18) selon une direction transversale à ladite direction de travail (WD) ;
- chauffer, au moyen desdites fumées de combustion, la surface externe de ladite paroi inférieure (21) qui irradie la chaleur vers l'intérieur de ladite enveloppe interne (18) et pour frapper au moins une partie des produits alimentaires (400) avec lesdites fumées de combustion, entrant par ledit au moins un passage supérieur (25, 26, 125, 126).

15. Procédé selon la revendication 14, **caractérisé en ce qu'**il permet de générer des fumées de combustion au moyen de deux sources de génération de chaleur (33) de deux chambres de combustion (31, 130, 131) respectives, dans lequel les fumées de combustion pénètrent dans des parties respectives (101, 102) de l'espace intermédiaire inférieur (122) subdivisé par une feuille de séparation (100) et suivent des trajets respectifs (P1, P2) des fumées de combustion qui se développent le long des parties respectives (101, 102), montent le long des espaces intermédiaires latéraux (23, 24, 123, 124) et traversent lesdits passages supérieurs (25, 26, 125, 126), pénètrent à l'intérieur de ladite enveloppe interne (18) selon des directions sensiblement parallèles et des sens opposés les uns aux autres et toutes deux transversales à ladite direction de travail (WD).
